# EUROPÄISCHE PATENTSCHRIFT

(11) **EP 3 156 819 B1**
(45) Veröffentlichungstag und Bekanntmachung des Hinweises auf die Patenterteilung: **11.12.2019**
(21) Anmeldenummer: 16001950.1
(22) Anmeldetag: 07.09.2016
(51) Int. Cl.: G01S 13/93, B60R 19/48, G01S 17/93, G01S 7/40, G01S 7/497

(54) **VERFAHREN UND VORRICHTUNG ZUR VERMEIDUNG VON FEHLEINGRIFFEN EINES FAHRERASSISTENZSYSTEMS EINES KRAFTFAHRZEUGS**
METHOD AND DEVICE FOR AVOIDING INCORRECT PROCEDURES OF A DRIVER ASSISTANCE SYSTEM OF A MOTOR VEHICLE
PROCEDE ET DISPOSITIF DESTINES A EVITER DES INTERVENTIONS EFFECTUEES PAR ERREUR D'UN SYSTEME D'ASSISTANCE AU CONDUCTEUR D'UN VEHICULE AUTOMOBILE

(30) Priorität: 13.10.2015 DE 102015013299
(43) Veröffentlichungstag der Anmeldung: 19.04.2017
(73) Patentinhaber: MAN Truck & Bus SE, 80995 München (DE)
(72) Erfinder: Tigges, Gunnar, 82178 Puchheim (DE); Hölting, Christoph, 85567 Bruck Pienzenau (DE); Mangold, Markus, 85221 Dachau (DE); Adamczyk, Gregor, 85447 Grucking (DE)
(74) Vertreter: v. Bezold & Partner Patentanwälte - PartG mbB

(56) Entgegenhaltungen:
- EP-A1- 3 051 309
- WO-A1-2006/114206
- WO-A1-2016/087010
- US-A1- 2008 186 204

## Beschreibung

Die Erfindung betrifft Verfahren und eine Vorrichtung zur Vermeidung von Fehleingriffen eines Fahrerassistenzsystems eines Kraftfahrzeugs, wobei das Fahrerassistenzsystem in Abhängigkeit von einer Messgröße einer Sensoreinrichtung zur Umfelderfassung des Kraftfahrzeugs einen Sollabstand des Fahrzeugs regelt, eine Notbremsung einleiten kann und/oder einen Warnhinweis erzeugen kann, und wobei das Fahrzeug einen an der Fahrzeugfront montierbaren Frontanbau, z. B. ein Arbeitsgerät aufweist.

In Kraftfahrzeugen werden Sensoren zur Umfelderfassung des Fahrzeugs im Zusammenhang mit Fahrerassistenzsystemen, beispielsweise Abstandswarn- und Regelsystemen oder Notbremssystemen, zur Ortung von Objekten, insbesondere von anderen Fahrzeugen, im Umfeld des eigenen Fahrzeugs eingesetzt. Sensoren zur Umfelderfassung sind beispielsweise Radarsensoren. Die Radarsensoren sind in der Regel an dem Kraftfahrzeug verdeckt eingebaut und weisen in eine bestimmte Richtung, meist in Fahrtrichtung. Der verdeckte Einbau erfolgt z. B. zwischen einer Karosserie und einem vorderen Stoßfänger des Kraftfahrzeugs oder zwischen Karosserie und einer Sensorblende. Aus der Praxis sind ferner LIDAR-Systeme, Laser-Scanner oder kamerabasierte Sensorsysteme zur Umfelderfassung bekannt.

Die zum Einsatz kommenden Sensorsysteme (z. B. Radarsensoren) bei Notbrems- und Abstandregelsystemen benötigen für eine einwandfreie Funktion eine freie "Sicht" auf den von ihnen überwachten Raum vor dem Sensor. Wird dieser Bereich z. B. dadurch gestört, dass an der Fahrzeugfront Anbauten angebracht werden, die die Sensorsicht ganz oder teilweise stören, kann es zu Fehldetektionen und damit zu ungewollten Systemeingriffen des Fahrerassistenzsystems kommen. Frontanbauten, z. B. ein frontseitig montierbares Arbeitsgerät (z. B. Schneepflug, Straßenkehrvorrichtung etc.) oder eine Befestigungsvorrichtung zum frontseitigen Befestigen von Arbeitsgeräten, wie z. B. Geräteanbauplatten oder deren Vorbereitungen bzw. Halterungen im Lkw (oder auch Pkw), können dabei durch ihre Position und Form sehr unterschiedlich die Sensorsicht beeinflussen. Insbesondere im Nutzfahrzeugbereich kommt eine Vielzahl unterschiedlicher Frontanbauten zum Einsatz.

Aus der Offenlegungsschrift US 2008/186204 A1 ist ein Sensorsystem zur Umfelderfassung bekannt, welches den Heckbereich eines Fahrzeugs überwacht und mit einem Modul zur Anhängererkennung ausgestattet ist. Ist ein Anhänger am Fahrzeug montiert, wird dieser aufgrund seines charakteristischen Signalmusters nach einer Lernphase vom System automatisch erkannt und der vom Anhänger beanspruchte Bereich bei der Umfelderfassung ignoriert. Nachteilig an diesem Verfahren ist allerdings, dass aufgrund unterschiedlicher Bauformen der Anhänger bei jedem Wechsel des Anhängertyps zunächst Fehldetektionen des Sensorsystems auftreten.

Es ist daher eine Aufgabe der Erfindung, ein Verfahren und eine Vorrichtung bereitzustellen, mit denen Fehleingriffe derartiger Fahrerassistenzsysteme, die von einer Fehldetektion des Sensorsystems zur Umfelderfassung resultieren, zuverlässiger vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Vermeidung von Fehleingriffen eines Fahrerassistenzsystems eines Kraftfahrzeugs bereitgestellt. Bei dem Fahrerassistenzsystem handelt es sich um ein Fahrerassistenzsystem, das in Abhängigkeit von einer Messgröße einer Sensoreinrichtung zur Umfelderfassung des Kraftfahrzeugs einen Sollabstand des Fahrzeugs regelt, eine Notbremsung einleiten kann und/oder einen Warnhinweis erzeugen kann. Das Fahrerassistenzsystem kann somit ein Abstandswarnsystem, ein Abstandsregelsystem (engl. Adaptive Cruise Control) und/oder ein Notbremssystem sein. Das Fahrzeug weist einen an der Fahrzeugfront montierbaren Frontanbau auf. Der Frontanbau kann ein frontseitig montierbares Arbeitsgerät oder eine Befestigungsvorrichtung zum frontseitigen Befestigen von Arbeitsgeräten, beispielsweise eine Geräteanbauplatte oder eine Befestigungsvorrichtung für eine Geräteanbauplatte, sein.

Das erfindungsgemäße Verfahren umfasst das Bereitstellen eines Elements bzw. Bauteils, nachfolgend als Blockierelement bezeichnet, das an einer vorbestimmten Montageposition zwischen der Sensoreinrichtung und dem Frontanbau im Erfassungsbereich der Sensoreinrichtung anordenbar ist. Wenn das Blockierelement in dieser Montageposition angeordnet ist, führt es dazu, dass es die zu detektierende Sensorstrahlung ganz oder zumindest teilweise in einer charakteristischen Weise blockiert, absorbiert und/oder abschirmt und die Sensoreinrichtung in Folge dessen wenigstens ein vorbestimmtes Signal ausgibt. Ob das Blockierelement montiert ist, kann somit daran erkannt werden, dass die Sensorvorrichtung das wenigstens eine vorbestimmte Signal ausgibt. Das Blockierelement kann somit auch als Abschirmelement oder Blende bezeichnet werden.

Das Verfahren umfasst ferner das Bereitstellen einer Steuereinrichtung für das Fahrerassistenzsystem, die ausgebildet ist, das Fahrerassistenzsystem in einen vorbestimmten Betriebsmodus zu versetzen, wenn die Sensoreinrichtung das wenigstens eine vorbestimmte Signal ausgibt. Dieser vorbestimmte Betriebsmodus ist vorzugsweise ein Betriebsmodus, in dem das Fahrerassistenzsystem abgeschaltet oder deaktiviert ist.

Das Verfahren umfasst ferner das Anordnen des Blockierelements an der vorbestimmten Montageposition, wenn der Frontanbau an der Fahrzeugfront montiert wird; und das Entfernen des Blockierelements, wenn der Frontanbau von der Fahrzeugfront entfernt wird.

Ein besonderer Vorzug der Erfindung liegt somit darin, dass bei einer Montage eines Frontanbaus das Blockierelement zwischen Frontanbau und Sensoreinrichtung angeordnet wird und zu einer definierten Systemreaktion des Assistenzsystems, z. B. dessen Abschaltung, führt. Dadurch können unerwünschte Fehleingriffe des Fahrerassistenzsystems beim Betrieb des Fahrzeugs und bei angebrachtem Frontanbau vermieden werden. Beim Betrieb des Fahrzeugs ohne Frontanbau wird das Assistenzsystem wie üblich eingesetzt. Es ist somit nicht notwendig, die Sensoreinrichtung so einzurichten, dass sie eine Vielzahl möglicher Frontanbauten erkennt. Stattdessen wird die Vielfalt möglicher Frontanbauten durch das Vorsehen des Blockierelements auf ein vorbestimmtes Element (Blockierelement) und damit eine vordefinierte Versperrung oder Abschirmung der Sensoreinrichtung zurückgeführt, die dazu führt, dass der Sensor wenigstens ein vorbestimmtes Signal ausgibt. Dieses vorbestimmte Signal kann dann zuverlässig erkannt werden und führt dann zu einer definierten Systemreaktion (z. B. Abschaltung) des Assistenzsystems.

Das Blockierelement kann so ausgeführt sein, dass es in der Montageposition einen Strahlengang von und/oder zu der Sensoreinrichtung vollständig oder zumindest teilweise blockiert bzw. abschirmt.

Gemäß einer bevorzugten Ausführungsform wird das Blockierelement am Frontanbau befestigt, derart, dass durch das Montieren des Frontanbaus an der Frontseite des Fahrzeugs das Blockierelement gleichzeitig an der vorbestimmten Montageposition angeordnet wird und dass durch das Entfernen des Frontanbaus das Blockierelement gleichzeitig wieder entfernt wird. Dies ermöglicht eine gemeinsame Montage bzw. Demontage von Frontanbau und Blockierelement.

Gemäß einer besonders bevorzugten Ausführungsform umfasst die Sensoreinrichtung einen Radarsensor. Gemäß dieser Ausführungsform enthält das Blockierelement einen Absorber für Radarstrahlung, so dass vorzugsweise ein Großteil der vom Radarsensor emittierten Radarstrahlung von dem Blockierelement absorbiert wird. Derartige Absorber sind an sich aus dem Stand der Technik bekannt.

Der Absorber kann beispielsweise ein Material enthalten, das elektromagnetische Strahlung absorbiert, die im Bereich von 5 bis 77 GHz liegt. Der Absorber kann beispielsweise ein Polyurethan-Schaummaterial enthalten.

Gemäß einer weiteren vorteilhaften Variante der Ausführungsform aufweisend einen Radarsensor und ein Blockierelement mit einem Absorber für Radarstrahlung kann das Blockierelement auf einer in der Montageposition dem Radarsensor zugewandten Seite von einem Kunststoffmaterial, insbesondere einem für Radarstrahlung durchlässigen Kunststoff, begrenzt sein. Beispielsweise kann derselbe Kunststoff gewählt werden, der auch zur Abdeckung des Radarsensors verwendet wird. Statt eines Kunststoffs kann auch ein anderes für Radarstrahlung durchlässiges Material gewählt werden.

Ferner kann das Blockierelement auf einer in der Montageposition dem Radarsensor abgewandten Seite von einem Blechteil oder einer Wand aus einem metallischen Werkstoff begrenzt sein. Beispielsweise kann das Blockierelement auf den in der Montageposition dem Radarsensor nicht zugewandten Seiten von einem Blechbiegeteil ummantelt sein. Das Blechbiegeteil schützt den Absorber vor äußeren mechanischen Einwirkungen und weist gleichzeitig keine bzw. keine gute Durchlässigkeit für Radarstrahlung auf.

Eine Möglichkeit der erfindungsgemäßen Realisierung sieht vor, dass eine Traverse zum Befestigen einer Geräteanbauplatte oder einer Geräteträgervorbereitung bzw. Geräteträgerhalterung an einer auf der in der Montageposition dem Radarsensor abgewandten Seite liegenden Wand des Blockierelements befestigt ist.

Neben der beispielhaft hervorgehobenen Ausgestaltung der Sensoreinrichtung als Radarsensor kann die Sensoreinrichtung auch ein Lichtsensor eines LIDAR-Systems (LIDAR: engl. Light Detection and Ranging) oder eine Kamera sein. In diesem Fall umfasst das Blockierelement ein lichtundurchlässiges Bauteil, vorzugsweise ein schwarzes Bauteil, z. B. eine schwarze Klappe, die in der Montageposition im Lichtkegel des Lichtsensors bzw. der Kamera angeordnet ist.

Gemäß einem zweiten Gesichtspunkt der Erfindung wird eine Vorrichtung zur Vermeidung von Fehleingriffen eines Fahrerassistenzsystems eines Kraftfahrzeugs bereitgestellt. Die Vorrichtung ist ausgebildet, das Verfahren wie in diesem Dokument beschrieben auszuführen. Das Fahrerassistenzsystem ist somit wieder ein Fahrerassistenzsystem, das in Abhängigkeit von einer Messgröße einer Sensoreinrichtung zur Umfelderfassung des Kraftfahrzeugs einen Sollabstand des Fahrzeugs regelt, eine Notbremsung einleiten kann und/oder einen Warnhinweis erzeugen kann. Ferner weist das Fahrzeug einen an der Fahrzeugfront anbringbaren und/oder angebrachten Frontanbau auf, vorzugsweise ein frontseitig anbringbares Arbeitsgerät oder eine Befestigungsvorrichtung zum frontseitigen Befestigen von Arbeitsgeräten.

Die Vorrichtung umfasst ferner ein Blockierelement und eine Montageeinrichtung, mittels derer das Blockierelement bei einem an der Fahrzeugfront montierten Frontanbau an einer vorbestimmten Montageposition zwischen der Sensoreinrichtung und dem Frontanbau im Erfassungsbereich der Sensoreinrichtung anordenbar ist und in diesem angeordneten Zustand dazu führt, dass die Sensoreinrichtung wenigstens ein vorbestimmtes Signal ausgibt. Das Blockierelement kann beispielsweise über die Montageeinrichtung am Frontaufbau befestigt werden, wobei der Frontanbau wiederum an der Fahrzeugfront, z. B. einem Fahrzeugrahmen lösbar befestigt ist. Die Vorrichtung umfasst ferner eine Steuereinrichtung für das Fahrerassistenzsystem, die ausgeführt ist, das Fahrerassistenzsystem in einen vorbestimmten Betriebsmodus, insbesondere einen Betriebsmodus, in dem das Fahrerassistenzsystem abgeschaltet oder deaktiviert ist, zu versetzen, wenn die Sensoreinrichtung das wenigstens eine vorbestimmte Signal ausgibt.

Die Erfindung betrifft ferner ein Kraftfahrzeug, insbesondere ein Nutzfahrzeug, umfassend (a) eine Sensoreinrichtung zur Umfelderfassung des Kraftfahrzeugs; (b) ein Fahrerassistenzsystem, das in Abhängigkeit von einer Messgröße der Sensoreinrichtung einen Sollabstand des Fahrzeugs regelt, eine Notbremsung einleiten kann und/oder einen Warnhinweis erzeugen kann; (c) einen an der Fahrzeugfront anbringbaren Frontanbau, vorzugsweise ein frontseitig anbringbares Arbeitsgerät oder eine Befestigungsvorrichtung zum frontseitigen Befestigen von Arbeitsgeräten; und (d) eine Vorrichtung zur Vermeidung von Fehleingriffen eines Fahrerassistenzsystems eines Kraftfahrzeugs, wie in diesem Dokument beschrieben.

Zur Vermeidung von Wiederholungen sollen Merkmale, die vorstehend in Zusammenhang mit dem Verfahren offenbart wurden, auch als vorrichtungsgemäß offenbart gelten und beanspruchbar sein. Die vorgenannten Aspekte und erfindungsgemäßen Merkmale und Ausführungsvarianten, insbesondere betreffend das Blockierelement und die Sensoreinrichtung, gelten somit auch für vorrichtungsgemäße Ansprüche.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Teil einer Frontkarosserie eines Nutzfahrzeugs mit montiertem Frontanbau;
- Figur 2: eine schematische Darstellung einer Vorrichtung zur Vermeidung von Fehleingriffen eines Fahrerassistenzsystems gemäß einer Ausführungsform der Erfindung; und
- Figur 3: eine perspektivische Darstellung eines Blockierelements mit einer befestigten Traverse einer Geräteträgervorbereitung.

Gleiche oder funktional äquivalente Elemente sind in allen Figuren mit denselben Bezugszeichen bezeichnet.

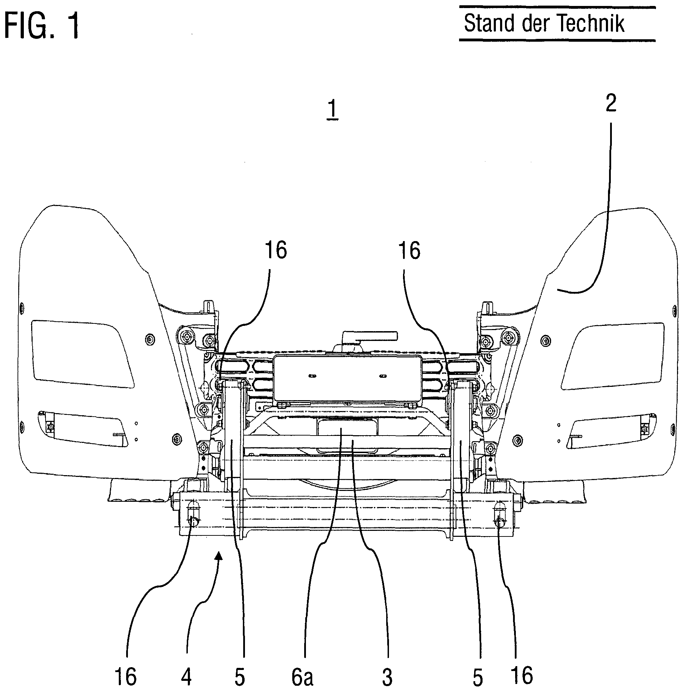

Figur 1 zeigt einen Teil einer an sich bekannten Frontkarosserie 2 eines Fahrzeugs 1, vorliegend eines Nutzfahrzeugs, mit montiertem Frontanbau. Der an sich bekannte Frontanbau umfasst eine Geräteträgervorbereitung 4 (Halterung für anzubringende Arbeitsgeräte), aufweisend zwei Vertikalträger 5 und eine Traverse 3. Die Vertikalträger weisen eine Mehrzahl an Verschraubungspunkten (nicht sichtbar) auf, um beispielsweise eine Geräteanbauplatte (ebenfalls nicht gezeigt) an den Vertikalträger zu befestigen. An der Geräteanbauplatte kann dann wiederum ein Arbeitsgerät, wie z. B. ein Schneepflug, eine Straßenkehreinrichtung etc. befestigt werden. Die Geräteträgervorbereitung 4 ist an vier Befestigungsstellen 16 am Fahrzeugrahmen befestigt. In Figur 1 ist ferner die Abdeckblende 6a eines Radarsensors sichtbar.

Durch das Anbringen der Geräteträgervorbereitung 4 und/oder der Arbeitsgeräte kann die Sensorsicht eines im Bereich der Fahrzeugfront 2 hinter der Abdeckblende 6a angebrachten Radarsensors ganz oder teilweise gestört werden, so dass es zu Fehldetektionen und damit zu ungewollten Systemeingriffen des Fahrerassistenzsystems kommen kann, wie vorstehend bereits beschrieben wurde.

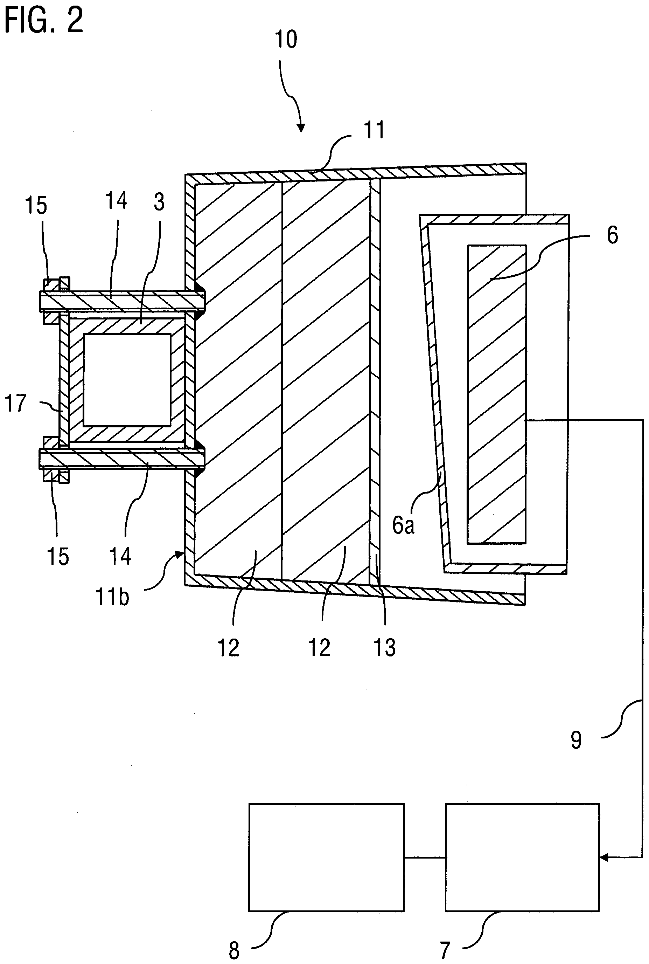

Figur 2 zeigt eine schematische Darstellung einer Vorrichtung zur Vermeidung solcher Fehleingriffe eines Fahrerassistenzsystems gemäß einer Ausführungsform der Erfindung. Vorliegend ist das Fahrerassistenzsystem 8 ein Abstandsregelsystem und/oder ein Notbremssystem. Das Notbremssystem unterstützt bei Gefahr vorbeugend eine Notbremsung oder leitet diese selbsttätig ein. Das Fahrerassistenzsystem 8 nutzt zur Ortung von Objekten, insbesondere von anderen Fahrzeugen, im Umfeld des eigenen Fahrzeugs einen an sich bekannten Radarsensor 6. Der Radarsensor 6 wird zur Fahrzeugfrontseite hin von einem Gehäuse 6a aus einem für Radarstrahlen durchlässigem Werkstoff, vorliegend einem radardurchlässigen Kunststoff, umhaust.

Die Vorrichtung zur Vermeidung von Fehleingriffen des Fahrerassistenzsystems aufgrund von Fehldetektionen des Radarsensors 6 umfasst ein Blockierelement 10. Das Blockierelement 10 umfasst ein Absorbermaterial 12 für Radarstrahlung. Derartige Materialien sind an sich aus dem Stand der Technik bekannt. Beispielsweise kann als Absorber einen Schaum 12 aus Polyurethan verwendet werden, wie er beispielsweise unter dem Produktnamen ECCOSORB® HR von der Fa. Emerson & Coming Microwave Products N.V., Belgien vertrieben wird.

Zum Schutz vor Umwelteinflüssen wird das Schaummaterial 12 durch eine Sandwichbauweise gekapselt. Hierbei ist das Schaummaterial 12 sensorseitig von einem radardurchlässigen Kunststoff 13 begrenzt. Auf den dem Radarsensor 6 nicht zugewandten Seiten des Blockierelements 10 wird es von einem Blechbiegeteil 11 ummantelt. Das Blechbiegeteil 11 schützt das Schaummaterial 12 vor mechanischen Einwirkungen und lässt ferner keine oder kaum Radarstrahlung durch.

Figur 2 zeigt das Blockierelement 10 bereit in seiner Montageposition vor dem Radarsensor 6. Aus der in der Montageposition dem Radarsensor 6 abgewandten Seite 11b (Frontseite) des Blockierelements 10 ist eine an sich bekannte Traverse der Geräteträgervorbereitung 3 am Blockierelement 10 befestigt.

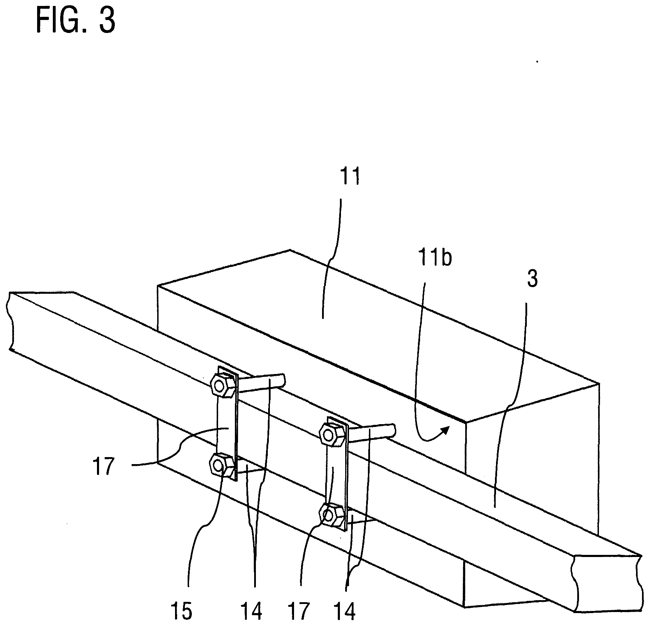

Dies ist auch in Figur 3 nochmals in einer perspektivischen Darstellung gezeigt. An der Frontseite 11b des Blockierelements 10, von dem in Figur 3 nur das äußere Blechbiegeteil 11 sichtbar ist, wird eine Traverse 3 mittels Befestigungsbolzen 14, Muttern 15 und zwei Verschraubungsplatten 17, die jeweils zwei Befestigungsbolzen auf gegenüberliegenden Seiten der Traverse 3 verbinden, befestigt. Die Befestigungsbolzen 14, Muttern 15 und die Verschraubungsplatten 17 dienen somit als Montageeinrichtung, um das Blockierelement an der Traverse 3 zu befestigen.

Die Traverse 3 ist wiederum an der Geräteträgervorbereitung 4 befestigt, die wiederum an den Befestigungsstellen 16 am Fahrzeugrahmen befestigt ist, wie vorstehend bei Figur 1 beschrieben wurde. Das Blockierelement ist somit nur mittelbar über den Frontanbau, hier der Geräteträgervorbereitung 4, am Fahrzeugrahmen befestigt. Die Befestigung des Blockierelements 10 an der Traverse 3 ermöglicht somit eine gemeinsame Montage bzw. Demontage von Frontanbau und Blockierelement 10. Somit wird jedes Mal, wenn ein Frontanbau am Fahrzeug befestigt wird, gleichzeitig das Blockierelement 10 zwischen Frontanbau und Radarsensor 6 an einer vorbestimmten Montagestelle montiert.

Alternativ besteht auch die Möglichkeit, das Blockierelement 10 selbst am Fahrzeugrahmen zu befestigen.

Die Montagestelle ist so gewählt, dass das Blockierelement 10 in der Montageposition einen Strahlengang von und/oder zu dem Radarsensor 6 vollständig oder zumindest teilweise blockiert. In der in Figur 2 gezeigten Montageposition absorbiert das Blockierelement 10 die vom Radarsensor 6 emittierte Radarstrahlung, so dass eine herkömmliche Objektdetektion durch den Radarsensor 6 bewusst verhindert wird.

Das Blockierelement 10 bewirkt somit in der in Figur 2 gezeigten Montageposition, dass der Radarsensor keine Objekte im vorausliegenden Umfeld des Fahrzeugs erkennen kann. Stattdessen erzeugt die Präsenz des Blockierelements 10 ein charakteristisches Sensorsignal am Ausgang des Radarsensors 6. Dieses kann beispielsweise vorab im Rahmen einer Kalibrierung oder Applizierung des Radarsensors 6 beim montierten Blockierelement 10 gemessen und in einer Steuereinrichtung 7 des Assistenzsystems 8 hinterlegt werden.

Die Vorrichtung zur Vermeidung von Fehleingriffen des Fahrerassistenzsystems aufgrund von Fehldetektionen des Radarsensors 6 umfasst somit ferner die Steuereinrichtung 7 für das Fahrerassistenzsystem 8, die über eine Signalleitung 9 mit dem Radarsensor 6 verbunden ist und dessen Ausgangssignal empfängt. Die Steuereinrichtung 7 und das Fahrerassistenzsystem sind in Figur 2 in einer schematischen Blockdiagrammdarstellung dargestellt.

Erkennt die Steuereinrichtung 7 anhand des Ausgangssignals des Radarsensors 6, dass das Blockierelement 10 montiert ist, z. B. wenn das für das Blockierelement charakteristische vorbestimmte und in der Steuereinrichtung 7 hinterlegte Sensorsignal gemessen wird, dann schaltet die Steuereinrichtung 7 das Abstandsregelsystem und Notbremssystem ab. Auf diese Weise können Fehleingriffe, z. B. plötzliche Notbremsungen, vermieden werden, die sonst aufgrund eines falschen Radarsignals, das durch einen Frontanbau ausgelöst wird, auftreten könnten. Erst wenn die Steuereinrichtung 7 das für das Blockierelement 10 charakteristische Sensorsignal nicht mehr erfasst, was der Fall ist, wenn die Anordnung aus Traverse 3 und dem daran befestigten Blockierelement 10 entfernt wurden, wird das Abstandsregelsystem und Notbremssystem wieder aktiviert. Die Steuereinrichtung 7 kann das Abstandsregelsystem und Notbremssystem 8 aktivieren oder deaktivieren. Die Steuereinrichtung 7 kann dabei Teil des Abstandsregel- und Notbremssystems 8 sein oder als separate Einheit oder Steuerung vorgesehen sein. Die Steuereinrichtung 7 kann auch als Teil einer zentralen Fahrzeugsteuerung ausgeführt sein oder in den Radarsensor 6 integriert sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Fahrzeug
- 2: Fahrzeugfront
- 3: Traverse der Geräteträgervorbereitung
- 4: Geräteträgervorbereitung
- 5: Vertikalträger
- 6: Radarsensor
- 6a: Abdeckblende für Radarsensor
- 7: Steuereinrichtung des Assistenzsystems
- 8: Assistenzsystem zur Abstandsregelung, Notbremssystem
- 9: Signalleitung
- 10: Blockierelement
- 11: Blechbiegeteil
- 11b: Frontseite des Blockierelements
- 12: Absorberschaum
- 13: Kunststoffspritzgussteil
- 14: Gewindebolzen
- 15: Mutter
- 16: Verschraubungsstelle
- 17: Verschraubungsplatte

## Patentansprüche

1. Verfahren zur Vermeidung von Fehleingriffen eines Fahrerassistenzsystems eines Kraftfahrzeugs, wobei das Fahrerassistenzsystem (8) in Abhängigkeit von einer Messgröße einer Sensoreinrichtung zur Umfelderfassung des Kraftfahrzeugs einen Sollabstand des Fahrzeugs regelt, eine Notbremsung einleiten kann und/oder einen Warnhinweis erzeugen kann; **dadurch gekennzeichnet, dass**
a) das Fahrzeug (1) einen an der Fahrzeugfront (2) montierbaren Frontanbau (3, 4, 5) aufweist, vorzugsweise ein frontseitig montierbares Arbeitsgerät oder eine Befestigungsvorrichtung (3, 4) zum frontseitigen Befestigen von Arbeitsgeräten,
wobei das Verfahren umfasst:
b) Bereitstellen eines Blockierelements (10), das an einer vorbestimmten Montageposition zwischen der Sensoreinrichtung und dem Frontanbau (3, 4, 5) im Erfassungsbereich der Sensoreinrichtung anordenbar ist und in diesem angeordneten Zustand dazu führt, dass die Sensoreinrichtung wenigstens ein vorbestimmtes Signal ausgibt,
c) Bereitstellen einer Steuereinrichtung (7) für das Fahrerassistenzsystem (8), die ausgebildet ist, das Fahrerassistenzsystem (8) in einen vorbestimmten Betriebsmodus, in dem das Fahrerassistenzsystem (8) abgeschaltet oder deaktiviert ist, zu versetzen, wenn die Sensoreinrichtung das wenigstens eine vorbestimmte Signal ausgibt;
d) Anordnen des Blockierelements (10) an der vorbestimmten Montageposition, wenn der Frontanbau (3, 4, 5) an der Fahrzeugfront (2) montiert wird; und
e) Entfernen des Blockierelements (10), wenn der Frontanbau (3, 4, 5) von der Fahrzeugfront (2) entfernt wird.

2. Verfahren nach Anspruch 1, **dadurch gekennzeichnet, dass** das Blockierelement (10) am Frontanbau (3, 4, 5) befestigt ist, derart, dass durch das Montieren des Frontanbaus (3) an der Frontseite (2) des Fahrzeugs (1) das Blockierelement (10) gleichzeitig an der vorbestimmten Montageposition angeordnet wird und dass durch das Entfernen des Frontanbaus (3, 4, 5) das Blockierelement (10) gleichzeitig wieder entfernt wird.

3. Verfahren nach Anspruch 1 oder 2, **dadurch gekennzeichnet, dass** das Blockierelement (10) in der Montageposition einen Strahlengang von und/oder zu der Sensoreinrichtung vollständig oder zumindest teilweise blockiert.

4. Verfahren nach einem der Ansprüche 1 bis 3, **dadurch gekennzeichnet,**
a) **dass** die Sensoreinrichtung einen Radarsensor (6) umfasst; und
b) **dass** das Blockierelement (10) einen Absorber (12) für Radarstrahlung enthält.

5. Verfahren nach Anspruch 4, **dadurch gekennzeichnet, dass** der Absorber (12)
a) ein Polyurethan-Schaummaterial enthält; und/oder
b) ein Material enthält, das elektromagnetische Strahlung absorbiert, die im Bereich von 5 bis 77 GHz liegt.

6. Verfahren nach Anspruch 4 oder 5, **dadurch gekennzeichnet, dass** das Blockierelement (10)
a) auf einer in der Montageposition dem Radarsensor (6) zugewandten Seite von einem Kunststoffmaterial, insbesondere einem für Radarstrahlung durchlässigen Kunststoff (13), begrenzt ist; und
b) auf einer in der Montageposition dem Radarsensor (6) abgewandten Seite von einem Blechteil (11) oder einer Wand aus einem metallischen Werkstoff begrenzt ist.

7. Verfahren nach einem der Ansprüche 4 bis 6, **dadurch gekennzeichnet, dass** der Absorber (12)
a) auf einer in der Montageposition dem Radarsensor (6) zugewandten Seite von einem für Radarstrahlung durchlässigen Material, insbesondere einem Kunststoff (13), begrenzt ist; und
b) auf den in der Montageposition dem Radarsensor (6) nicht zugewandten Seiten von einem Blechbiegeteil (11) ummantelt ist.

8. Verfahren nach Anspruch 7, **dadurch gekennzeichnet, dass** eine Traverse zum Befestigen einer Geräteanbauplatte oder einer Geräteträgerhalterung an einer auf der in der Montageposition dem Radarsensor (6) abgewandten Seite liegenden Wand des Blockierelements befestigt ist.

9. Verfahren nach einem der Ansprüche 1 bis 3, **dadurch gekennzeichnet,**
a) **dass** die Sensoreinrichtung eine Kamera oder ein Lichtsensor eines LIDAR-Systems oder eines Laser-Scanners ist; und
b) **dass** das Blockierelement (10) ein lichtundurchlässiges Bauteil, beispielsweise eine schwarzes Bauteil, umfasst.

10. Vorrichtung zur Vermeidung von Fehleingriffen eines Fahrerassistenzsystems (8) eines Kraftfahrzeugs, wobei das Fahrerassistenzsystem (8) in Abhängigkeit von einer Messgröße einer Sensoreinrichtung zur Umfelderfassung des Kraftfahrzeugs einen Sollabstand des Fahrzeugs regelt, eine Notbremsung einleiten kann und/oder einen Warnhinweis erzeugen kann; **dadurch gekennzeichnet, dass**
a) das Fahrzeug (1) einen an der Fahrzeugfront (2) anbringbaren Frontanbau (3, 4, 5), vorzugsweise ein frontseitig anbringbares Arbeitsgerät oder eine Befestigungsvorrichtung (3, 4) zum frontseitigen Befestigen von Arbeitsgeräten, aufweist,
wobei die Vorrichtung umfasst:
b) ein Blockierelement (10);
c) eine Montageeinrichtung (14, 15, 17), mittels derer das Blockierelement (10) bei einem an der Fahrzeugfront (2) montierten Frontanbau (3, 4, 5) an einer vorbestimmten Montageposition zwischen der Sensoreinrichtung und dem Frontanbau (3, 4, 5) im Erfassungsbereich der Sensoreinrichtung anordenbar ist und in diesem angeordneten Zustand dazu führt, dass die Sensoreinrichtung wenigstens ein vorbestimmtes Signal ausgibt; und
d) eine Steuereinrichtung (7) für das Fahrerassistenzsystem (8), die ausgeführt ist, das Fahrerassistenzsystem (8) in einen vorbestimmten Betriebsmodus, in dem das Fahrerassistenzsystem (8) abgeschaltet oder deaktiviert ist, zu versetzen, wenn die Sensoreinrichtung das wenigstens eine vorbestimmte Signal ausgibt.

11. Kraftfahrzeug, insbesondere Nutzfahrzeug, umfassend
a) eine Sensoreinrichtung zur Umfelderfassung des Kraftfahrzeugs;
b) ein Fahrerassistenzsystem (8), das in Abhängigkeit von einer Messgröße der Sensoreinrichtung (b1) einen Sollabstand des Fahrzeugs regelt, (b2) eine Notbremsung einleiten kann und/oder (b3) einen Warnhinweis erzeugen kann;
c) einen an der Fahrzeugfront (2) anbringbaren Frontanbau (3, 4, 5), vorzugsweise ein frontseitig anbringbares Arbeitsgerät oder eine Befestigungsvorrichtung zum frontseitigen Befestigen von Arbeitsgeräten; und
d) eine Vorrichtung nach Anspruch 10.

## Claims

1. A method for avoiding incorrect interventions by a driver assistance system of a motor vehicle, wherein the driver assistance system (8) regulates a setpoint distance of the vehicle in accordance with a measurement variable of a sensor device for sensing the surroundings of the motor vehicle, can initiate an emergency braking operation and/or can generate a warning indication; **characterized in that**
a) the vehicle (1) has a front attachment (3, 4, 5) which can be mounted on the front (2) of the vehicle, preferably an implement which can be mounted on the front or a fastening device (3, 4) for fastening implements on the front,
wherein the method comprises:
b) making available a blocking element (10) which can be arranged at a predetermined mounting position between the sensor device and the front attachment (3, 4, 5) in the sensing range of the sensor device, and in the state in which it is arranged therein causes the sensor device to output at least one predetermined signal,
c) making available a control device (7) for the driver assistance system (8), which control device (7) is designed to place the driver assistance system (8) in a predetermined operating mode in which the driver assistance system (8) is switched off or deactivated when the sensor device outputs the at least one predetermined signal;
d) arranging the blocking element (10) at the predetermined mounting position when the front attachment (3, 4, 5) is mounted at the front (2) of the vehicle; and
e) removing the blocking element (10) when the front attachment (3, 4, 5) is removed from the front (2) of the vehicle.

2. The method according to Claim 1, **characterized in that** the blocking element (10) is fastened to the front attachment (3, 4, 5), in such a way that, as a result of the mounting of the front attachment (3) on the front side (2) of the vehicle (1), the blocking element (10) is simultaneously arranged at the predetermined mounting position, and **in that** as a result of the removal of the front attachment (3, 4, 5) the blocking element (10) is simultaneously removed again.

3. The method according to Claim 1 or 2, **characterized in that** in the mounted position the blocking element (10) blocks a beam path from and/or to the sensor device completely or at least partially.

4. The method according to one of Claims 1 to 3, **characterized**
a) **in that** the sensor device comprises a radar sensor (6); and
b) **in that** the blocking element (10) contains an absorber (12) for radar radiation.

5. The method according to Claim 4, **characterized in that** the absorber (12)
a) contains a polyurethane foam material; and/or
b) contains a material which absorbs electromagnetic radiation which is in the range from 5 to 77 GHz.

6. The method according to Claim 4 or 5, **characterized in that** the blocking element (10)
a) is bounded, on a side which in the mounted position faces the radar sensor (6), by a plastic material, in particular a plastic (13) which is permeable to radar radiation; and
b) is bounded, on a side which in the mounted position faces away from the radar sensor (6), by a sheet-metal part (11) or a wall made of a metallic material.

7. The method according to one of Claims 4 to 6, **characterized in that** the absorber (12)
a) is bounded, on a side which in the mounted position faces the radar sensor (6), by a material which is permeable to radar radiation, in particular a plastic (13); and
b) is enclosed, on the sides which in the mounted position do not face the radar sensor (6), by a bent sheet-metal part (11).

8. The method according to Claim 7, **characterized in that** a crossmember for fastening a device attachment plate or a device carrier mount is fastened on a wall, located on the side which in the mounted position faces away from the radar sensor (6), of the blocking element.

9. The method according to one of Claims 1 to 3, **characterized**
a) **in that** the sensor device is a camera or a light sensor of a LIDAR system or of a laser scanner; and
b) **in that** the blocking element (10) comprises an opaque component, for example a black component.

10. A device for avoiding incorrect interventions by a driver assistance system (8) of a motor vehicle, wherein the driver assistance system (8) regulates a setpoint distance of the vehicle in accordance with a measurement variable of a sensor device for sensing the surroundings of the motor vehicle, and can initiate an emergency braking operation and/or can generate a warning indication, **characterized in that**
a) the vehicle (1) has a front attachment (3, 4, 5) which can be fastened to the front (2) of the vehicle, preferably an implement which can be fastened to the front or a fastening device (3, 4) for fastening implements to the front,
wherein the device comprises:
b) a blocking element (10);
c) a mounting device (14, 15, 17), by means of which, when there is a front attachment (3, 4, 5) mounted on the front (2) of the vehicle, the blocking element (10) can be arranged at a predetermined mounting position between the sensor device and the front attachment (3, 4, 5) in the sensing range of the sensor device, and in this arranged state causes the sensor device to output at least one predetermined signal; and
d) a control device (7) for the driver assistance system (8) which is designed to place the driver assistance system (8) in a predetermined operating mode in which the driver assistance system (8) is switched off or deactivated when the sensor device outputs the at least one predetermined signal.

11. A motor vehicle, in particular a utility vehicle, comprising
a) a sensor device for sensing the surroundings of the motor vehicle;
b) a driver assistance system (8) which regulates a setpoint distance of the vehicle in accordance with a measurement variable of the sensor device (b1), (b2) can initiate an emergency braking operation, and/or (b3) can generate a warning indication;
c) a front attachment (3, 4, 5) which can be fastened on the front (2) of the vehicle, preferably an implement which can be fastened to the front or a fastening device for fastening implements to the front; and
d) a device according to Claim 10.

## Revendications

1. Procédé pour éviter des interventions effectuées par erreur d'un système d'assistance au conducteur d'un véhicule automobile, dans lequel, en fonction d'une grandeur de mesure d'un dispositif de capteur destiné à détecter l'environnement du véhicule automobile, le système d'assistance au conducteur (8) régule une distance de consigne du véhicule, peut opérer un freinage d'urgence et/ou peut produire un message d'avertissement; **caractérisé en ce que**
a) le véhicule (1) présente une structure frontale (3, 4, 5) pouvant être montée à l'avant du véhicule (2), de préférence un appareil de travail pouvant être monté sur le côté avant ou un dispositif de fixation (3, 4) pour la fixation frontale d'appareils de travail,
dans lequel le procédé comprend les opérations suivantes:
b) préparer un élément de blocage (10), qui peut être agencé à une position de montage prédéterminée entre le dispositif de capteur et la structure frontale (3, 4, 5) dans la zone de détection du dispositif de capteur et qui conduit, dans cet état d'agencement, à ce que le dispositif de capteur émette au moins un signal prédéterminé,
c) préparer un dispositif de commande (7) pour le système d'assistance au conducteur (8), qui est configuré pour amener le système d'assistance au conducteur (8) dans un mode de fonctionnement prédéterminé, dans lequel le système d'assistance au conducteur (8) est déconnecté ou désactivé, lorsque le dispositif de capteur émet ledit au moins un signal prédéterminé;
d) agencer l'élément de blocage (10) à la position de montage prédéterminée, lorsque la structure frontale (3, 4, 5) est montée à l'avant du véhicule (2); et
e) enlever l'élément de blocage (10), lorsque la structure frontale (3, 4, 5) est enlevée de l'avant du véhicule (2).

2. Procédé selon la revendication 1, **caractérisé en ce que** l'élément de blocage (10) est fixé à la structure frontale (3, 4, 5), de telle manière que par le montage de la structure frontale (3) sur le côté avant (2) du véhicule (1) l'élément de blocage (10) soit en même temps agencé à la position de montage prédéterminée et que par l'enlèvement de la structure frontale (3, 4, 5) l'élément de blocage (10) soit de nouveau enlevé en même temps.

3. Procédé selon une revendication 1 ou 2, **caractérisé en ce que** l'élément de blocage (10) dans la position de montage bloque entièrement ou au moins partiellement un trajet de rayons depuis et/ou vers le dispositif de capteur.

4. Procédé selon l'une quelconque des revendications 1 à 3, **caractérisé en ce que**:
a) le dispositif de capteur comprend un capteur radar (6), et
b) l'élément de blocage (10) contient un absorbeur (12) pour un rayonnement radar.

5. Procédé selon la revendication 4, **caractérisé en ce que** l'absorbeur (12)
a) contient un matériau de mousse de polyuréthane, et/ou
b) contient un matériau, qui absorbe le rayonnement électromagnétique compris dans la plage de 5 à 77 GHz.

6. Procédé selon une revendication 4 ou 5, **caractérisé en ce que** l'élément de blocage (10)
a) est limité sur un côté tourné dans la position de montage vers le capteur radar (6) par un matériau de matière plastique, en particulier une matière plastique (13) transparente pour le rayonnement radar; et
b) est limité sur un côté situé dans la position de montage à l'opposé du capteur radar (6) par une pièce en tôle (11) ou par une paroi en un matériau métallique.

7. Procédé selon l'une quelconque des revendications 4 à 6, **caractérisé en ce que** l'absorbeur (12)
a) est limité sur un côté tourné dans la position de montage vers le capteur radar (6) par un matériau transparent pour le rayonnement radar, en particulier une matière plastique (13); et
b) est enveloppé sur les côtés non tournés dans la position de montage vers le capteur radar (6) par une pièce en tôle pliée (11).

8. Procédé selon la revendication 7, **caractérisé en ce qu'**une traverse permettant la fixation d'une plaque de montage d'appareil ou d'un appui de support d'appareil est fixée à une paroi de l'élément de blocage située sur le côté situé dans la position de montage à l'opposé du capteur radar (6).

9. Procédé selon l'une quelconque des revendications 1 à 3, **caractérisé en ce que**
a) le dispositif de capteur est une caméra ou un détecteur de lumière d'un système LIDAR ou d'un scanner à laser; et
b) l'élément de blocage (10) comprend un composant opaque, par exemple un composant noir.

10. Dispositif pour éviter des interventions effectuées par erreur d'un système d'assistance au conducteur (8) d'un véhicule automobile, dans lequel, en fonction d'une grandeur de mesure d'un dispositif de capteur destiné à détecter l'environnement du véhicule automobile, le système d'assistance au conducteur (8) régule une distance de consigne du véhicule, peut opérer un freinage d'urgence et/ou peut produire un message d'avertissement; **caractérisé en ce que**
a) le véhicule (1) présente une structure frontale (3, 4, 5) pouvant être installée à l'avant du véhicule (2), de préférence un appareil de travail pouvant être installé sur le côté avant ou un dispositif de fixation (3, 4) pour la fixation frontale d'appareils de travail,
dans lequel le dispositif comprend:
b) un élément de blocage (10);
c) un dispositif de montage (14, 15, 17), au moyen duquel l'élément de blocage (10) peut être agencé, lorsqu'une structure frontale (3, 4, 5) est montée à l'avant du véhicule (2), à une position de montage prédéterminée entre le dispositif de capteur et la structure frontale (3, 4, 5) dans la zone de détection du dispositif de capteur et conduit dans cette position d'agencement à ce que le dispositif de capteur émette au moins un signal prédéterminé; et
d) un dispositif de commande (7) pour le système d'assistance au conducteur (8), qui est configuré pour amener le système d'assistance au conducteur (8) dans un mode de fonctionnement prédéterminé, dans lequel le système d'assistance au conducteur (8) est déconnecté ou désactivé, lorsque le dispositif de capteur émet ledit au moins un signal prédéterminé.

11. Véhicule automobile, en particulier véhicule utilitaire, comprenant
a) un dispositif de capteur pour la détection de l'environnement du véhicule automobile;
b) un système d'assistance au conducteur (8), qui en fonction d'une grandeur de mesure d'un dispositif de capteur (b1) régule une distance de consigne du véhicule, (b2) peut opérer un freinage d'urgence et/ou (b3) peut produire un message d'avertissement;
c) une structure frontale (3, 4, 5) pouvant être installée à l'avant du véhicule (2), de préférence un appareil de travail pouvant être installé à l'avant ou un dispositif de fixation pour la fixation frontale d'appareils de travail; et
d) un dispositif selon la revendication 10.
